(19) Europäisches Patentamt
European Patent Office
Office européen des brevets

(11) **EP 1 965 993 B1**

(12) **EUROPÄISCHE PATENTSCHRIFT**

(45) Veröffentlichungstag und Bekanntmachung des Hinweises auf die Patenterteilung:
**15.05.2013 Patentblatt 2013/20**

(21) Anmeldenummer: **06830720.6**

(22) Anmeldetag: **19.12.2006**

(51) Int Cl.:
***B60C 23/06*** (2006.01)     ***B60T 8/172*** (2006.01)
***B62D 15/02*** (2006.01)

(86) Internationale Anmeldenummer:
**PCT/EP2006/069937**

(87) Internationale Veröffentlichungsnummer:
**WO 2007/074113 (05.07.2007 Gazette 2007/27)**

(54) **VERFAHREN UND SYSTEM ZUR UNTERSTÜTZUNG EINES FAHRERS BEIM EINPARKEN ODER RANGIEREN EINES KRAFTFAHRZEUGS**

METHOD AND SYSTEM FOR ASSISTING A DRIVER WHEN PARKING OR MANOEUVRING A MOTOR VEHICLE

PROCEDE ET SYSTEME D'ASSISTANCE AU CONDUCTEUR LORS DES MAN UVRES DE STATIONNEMENT D'UN VEHICULE AUTOMOBILE

(84) Benannte Vertragsstaaten:
**DE FR**

(30) Priorität: **23.12.2005 DE 102005062371**
**23.12.2005 DE 102005062369**
**23.12.2005 DE 102005062367**
**27.11.2006 DE 102006055847**
**19.12.2006 DE 102006060456**
**19.12.2006 DE 102006060457**

(43) Veröffentlichungstag der Anmeldung:
**10.09.2008 Patentblatt 2008/37**

(73) Patentinhaber: **Continental Teves AG & Co. oHG**
**60488 Frankfurt (DE)**

(72) Erfinder:
• **LÜKE, Stefan**
**57462 Olpe (DE)**

• **KÖBE, Andreas**
**64625 Bensheim (DE)**
• **GRIESSER, Martin**
**65760 Eschborn (DE)**
• **IRTH, Markus**
**55252 Mainz-Kastel (DE)**
• **FISCHER, Daniel**
**65824 Schwalbach (DE)**
• **SCHREINER, Frank**
**61381 Friedrichsdorf (DE)**
• **SUSSMANN, Christian**
**61440 Oberursel (DE)**

(56) Entgegenhaltungen:
**EP-A- 1 361 139      DE-A1- 10 215 009**
**DE-A1- 10 238 525      DE-A1- 10 338 255**
**DE-A1- 19 532 331**

**Beschreibung**

Die Erfindung betrifft ein Verfahren nach dem Oberbegriff des Anspruchs 1 und ein System zum Durchführen des Verfahrens nach dem Oberbegriff des Anspruchs 11.

Häufig werden Umfelderkennungssensoren in der Kraftfahrzeugtechnik verwendet, um den Abstand eines Kraftfahrzeugs zu einem feststehenden oder beweglichen Hindernis wie einem Fußgänger z.B. beim Einparken zu überwachen und dem Fahrer des Kraftfahrzeugs über ein entsprechendes Anzeigemittel u.a. optisch oder akustisch den Abstand zu dem Hindernis anzuzeigen. Ebenso werden bei schneller Fahrt z. B. auf einer Autobahn bzw. bei langsamer Fahrt im Kolonnenverkehr die Abstände zu vorausfahrenden oder nachfolgenden Verkehrsteilnehmern überwacht. Hierfür werden an der Front und/oder am Heck sowie an der Seite, zur Überwachung eines seitlichen Bereichs des Kraftfahrzeugs, jeweils Radarsensoren und/oder Ultraschallsensoren als Bestandteil eines dem Fachmann bekannten Umfelderkennungssystems angeordnet.

Umfelderkennungssensoren werden eingesetzt in Kombination mit Kollisionsvermeidungssystem, Fahrerassistenzsystem und/oder in Fahrzeugsicherheitssystem. Fahrzeugsicherheitssysteme können als Electronic Break System (EBS), Engine Management System (EMS), Antiblockiersystem (ABS), Antriebs-Schlupf-Regelung (ASR), Elektronisches Stabilitätsprogramm (ESP), Elektronische Differentialsperre (EDS), Traction Control System (TCS), Elektronische Bremskraftverteilung (EBV) und/oder Motor-Schleppmomenten-Regelung (MSR) ausgeführt werden.

Des Weiteren kann beispielsweise das Radarsystem Bestandteil eines ebenfalls bekannten Fahrassistenzsystems sein. Fahrerassistenzsysteme sind als elektronische Zusatzeinrichtungen in Fahrzeugen zur Unterstützung des Fahrers in bestimmten Fahrsituationen implementiert. Hierbei stehen oft Sicherheitsaspekte, aber vornämlich die Steigerung des Fahrkomforts im Vordergrund. Diese Systeme greifen teilautonom oder autonom in Antrieb, Steuerung (z.B. Gas, Bremse) oder Signalisierungseinrichtungen des Fahrzeuges ein oder warnen durch geeignete Mensch-Maschine-Schnittstellen den Fahrer kurz vor oder während kritischer Situationen.

Solche Fahrassistenzsysteme sind beispielsweise Einparkhilfe (Sensorarrays zur Hinderniss- und Abstanderkennung), Bremsassistent (BAS), Tempomat, Adaptive Cruise Control oder Abstandsregeltempomat (ACC), Abstandswarner, Abbiegeassistent, Stauassistent, Spurerkennungssystem, Spurhalteassistent/Spurassistent (Querführungsunterstützung, lane departure warning (LDW)), Spurhalteunterstützung (lane keeping support)), Spurwechselassistent (lane change assistance), Spurwechselunterstützung (lane change support), Intelligent Speed Adaption (ISA), Adaptives Kurvenlicht, Reifendruckkontrollsystem, Fahrerzustandserkennung, Verkehrszeichenerkennung, Platooning, Automatische Notbremsung (ANB), Auf- und Abblendassistent für das Fahrlicht, Nachtsichtsystem (Night Vision). Insbesondere sind Reifendruckerkennungssysteme an Hand der gemessenen Winkelgeschwindigkeit in der Lage direkt oder indirekt auf einen Reifendruckverlust Fahrzeugräder zu schließen. Reifendrucküberwachungssysteme sind in den folgenden Schutzrechten beschrieben, DE 102005042061 A, DE 19721480 A, DE 1194304 A, EP 1206359A, US 6826462A, DE 10032605A, EP 0869875A, EP0675812A, deren Inhalt Bestandteil der Anmeldung sind.

Ferner unterstützen Fahrerassistenzsysteme den Fahrer beim Einparkvorgang, beispielsweise durch Auffinden einer geeigneten Ausgangsposition für den Einparkvorgang, Vorgeben eines geeigneten Lenkwinkels oder einen automatischen Lenkeingriff, falls die Lenkbewegung des Fahrers nicht zum Ziel führt. Ferner sind Systeme in der Erprobung, die einen automatischen Parkvorgang nach vorheriger Vermessung der Parklücke durchführen. Ein derartiges System ist beispielsweise in der DE 38 13 083 A1 beschrieben, die vier Schalter bezüglich der Wahl der Betriebsart aufweist, über die der Fahrer den Ort und die Art der Parklücke angeben kann. Mit anderen Worten, der Fahrer selektiert zwischen linke Parklücke, linke Parktasche, rechte Parklücke oder rechte Parktasche.

Ferner beschreibt die DE 198 09 416 A1 ein Verfahren zum unterstützten Einparken eines Kraftfahrzeugs und eine Vorrichtung zur Durchführung des Verfahrens, wobei von einer Rundum-Sensorik mit einer Vielzahl von Abstandssensoren Objekte im Nahbereich um das Kraftfahrzeug und ihre Abstände zum Kraftfahrzeug erfasst werden. Eine nachgeschaltete Verarbeitungseinrichtung ermittelt aus den Abstandsdaten die Grösse einer potentiellen Parklücke, gegebenenfalls die Art ihrer Umgebung, sowie eine mögliche Strategie zum Einparken des Kraftfahrzeugs in der potentiellen Parklücke. Die ermittelte Strategie wird an den Fahrer mittels einer Anzeigeeinrichtung ausgegeben. Die in dem bekannten Verfahren angegebenen Voraussetzungen zum Aktivieren des Einparkassistenten bzw. der Einparkassistenz-Funktion sind jedoch nicht ausreichend, um ein sicheres unterstütztes oder automatisches Einparken durchzuführen.

In der DE 102005006966 A1 wird ein Verfahren zum Einparken eines Fahrzeugs beschrieben, bei dem eine Einparkbahn des Fahrzeugs aus einem festen Abschnitt im Bereich der Parklücke und einer Anfahrbahn mit einem Ansatzpunkt an den festen Abschnitt besteht. Die Anfahrbahn, die ausgehend von einer Ausgangsstellung bis zum dem Ansatzpunkt durchfahren wird, wird dabei in Form eines Polynoms berechnet. Dabei ist sicherzustellen, dass das Fahrzeug ausgehend von der Ausgangsstellung mit einem vorgegebenen Gierwinkel auf den festen Abschnitt der Einparkbahn bzw. in die Parklücke gesteuert werden kann.

Hierzu ist es bei dem bekannten Verfahren insbesondere vorgesehen, dass anhand der Fahrzeugposition, des Fahrzeuggierwinkels und des Fahrzeuglenkwinkels mittels eines Kennfeldes ermittelt wird, ob die Parklücke von einer gegebenen Ausgangsstellung aus befahrbar ist. Das Kennfeld wird dabei vorher (offline) berechnet und innerhalb des Fahrzeugs in einem Steuergerät hinterlegt. Dabei müssen für eine Vielzahl möglicher Ausgangspositionen für einen Einparkvorgang jeweils der Gierwinkel und der Lenkwinkel in dem Steuergerät gespeichert werden.

Es ist bekannt, Fahrzeuge automatisch entlang einer Sollbahn in eine zuvor mit Hilfe von Umfeldsensoren erfasste Parklücke zu steuern. Der Sollweg wird üblicherweise in Form von Polynomen oder als eine Abfolge von Kreis- und Klothoidbögen vorgegeben, wie es beispielsweise in der deutschen Offenlegungsschrift DE 199 400 07 A1 offenbart ist. Ausgehend von einem Startpunkt erfolgt üblicherweise eine Berechnung der Parameter der vorgesehenen Sollbahn.

Die Verfahren, die ein paralleles Einparken voll- oder semiautomatisch ermöglichen, führen dies in der Regel in nachfolgenden Schritten durch:

1. Vermessung der Parklücke im Vorbeifahren
2. Anzeige ob die Parklücke ausreicht, ob ein gültiger Startbereich für den Einparkvorgang erreicht wurde.
3. Berechnung einer Bahn zum Einfahren in die Parklücke
4. Abfahren der Bahn bei gleichzeitiger Korrektur der Bahn
5. Rangieren innerhalb der Parklücke

Die Punkte 1-3 basieren in der Regel ausschließlich auf Raddrehzahlsensoren und teilweise auf Lenkwinkelsensorik, mit denen eine Odometrieberechnung zur Positionsbestimmung durchgeführt wird, sowie einer Sensorik, welche die Parklücke im Vorbeifahren seitlich vermisst.

Punkt 4 basiert weitgehend auf dieser Sensorik. Erst am Ende des abgefahrenen Ist-Wegs können deshalb auch die bereits heute oft standardmäßig verbauten Ultraschallsensoren zur Abstandswarnung eingesetzt werden, um den Ist-Weg nachzukorrigieren. Somit kann erst bei Punkt 5 auf die Abstände der nach vorn und nach hinten gerichteten Umfeldsensorik zurückgegriffen werden.

Ein Verfahren gemäß dem Oberbegriff des Anspruchs 1 ist aus der deutschen Offenlegungsschrift DE 10338255 A1 bekannt.

Ein Problem bei diesem Vorgehen stellen die großen Toleranzen bei den Reifendimensionen dar, durch die sich trotz Einhaltung von DIN-Normen Wegdifferenzen bei gleichen Radumdrehungen ergeben können. Darüber hinaus variieren die Umlauflängen und somit die Radabrollumfänge auch abhängig von Profiltiefe und Luftdruck während des Fahrbetriebs, was in der Regel in langfristigen Prozessen stattfindet. Weitere Ungenauigkeiten ergeben sich aus Fehlern im Lenkwinkel z.B. durch Spiel und Torsion im Lenkgetriebe und Lenkgestänge, sowie der Umfeldsensorik und deren Ausrichtung.

Aufgabe der Erfindung ist es ein Verfahren bereitzustellen, dass eine Verbesserung der Bestimmung eines Sollweges für unterschiedliche Fahrmanöver, wie Einpark oder Rangiervorgänge, ermöglicht.

Diese Aufgabe wird durch ein Verfahren zur Unterstützung eines Fahrers beim Einparken oder Rangieren eines Kraftfahrzeuges, das mindestens ein Fahrerassistenzsystem und ein Fahrzeugsicherheitssystem aufweist, mit den Schritten, Erkennung des Umfeldes und Berechnung eines Sollweges in einem Berechungsmodell, wobei mittels des Fahrzeugsicherheitssystems eine Überwachung und Ermittlung der Umlauflängenunterschiede zwischen den einzelnen Räder erfolgt, die Sollbahn in einem Berechnungsmodell mittels der Umlauflängenunterschiede vorhergesagt wird und eine Erkennung des Umfeldes mittels des Fahrerassistenzsystems durchgeführt wird.

Die Grundüberlegung der Erfindung liegt in der Kombination von Fahrzeugsicherheitssystem, wie z.B. eines ABS /ESP-System mit einem Reifendrucküberwachungssystems (und einem Fahrerassistenzssystem, wie einem ACC-System und einem Einparkhilfesystem, um eine verbesserte Genauigkeit bei der Berechnung von vorgeschlagenen Sollwegen durchzuführen. Dies wird dadurch erreicht, dass die Informationen der einzelnen Systeme jeweils zur gegenseitigen Absicherung und Überprüfung einer von einem Einzelsystem ausgegebenen Information herangezogen werden. Zur Bewältigung dieser vielfältigen Aufgaben sind die Systeme mit leistungsfähigen Mikrorechnern ausgestattet, die Steuerungsprogramme für die jeweiligen Aufgaben abarbeiten. Häufig müssen zur Beurteilung des Fahrverhaltens Daten von zurückliegenden Fahrsituationen in Erinnerung behalten werden. Hierbei ist es möglich, entweder alle aufgelaufenen aktuellen Daten in bestimmten Zeitabständen zu speichern, oder Mittelwerte, Maximalwerte, Minimalwerte und Standardabweichungen für interessante physikalische Parameter oder daraus berechnete Größen (Eingangsgrößen) festzuhalten.

Bevorzugte Ausführungsformen der Erfindung sind Gegenstand der Unteransprüche. Weitere Vorteile, Besonderheiten und zweckmäßige Weiterbildungen der Erfindung ergeben sich aus den Unteransprüchen und der nachfolgenden Darstellung bevorzugter Ausführungsbeispiele.

Eine vorteilhafte Weiterbildung des Verfahrens zeichnet sich dadurch aus, dass als Umlauflänge eines Rades, ein jeweiliger Radabrollumfang ($U_i$) eines Rades mittels mindestens eines Fahrzeugsicherheitssystems ermittelt wird und die ermittelten Radabrollumfänge ($U_i$) der einzelnen Räder zur Ermittlung der Radabrollumfangsunterschiede ausgewertet werden.

Bei einer weiteren vorteilhaften Ausgestaltung der Erfindung ist es vorgesehen, dass mittels eines ABS-System und/oder ESP-Systems und eines indirektes und/oder direkten Reifendrucküberwachungssystem als Fahrzeugsicherheitssystems die Überwachung der Radabrollumfangsunterschiede zwischen den einzelnen Räder erfolgt.

Gemäß einer weiteren besonders vorteilhaften Ausgestaltung werden zur Bestimmung der Radabrollumfangsunterschiede der Radabrollumfang ($U_1$) des vorderen rechten Rades mit dem Radabrollumfang ($U_2$) des vorderen linken Rades in Bezug gesetzt sowie der Radabrollumfang ($U_3$) des hinteren linken Rades mit dem Radabrollumfänge ($U_4$) des hinteren rechten Rades in Bezug gesetzt.

Gemäß einer weiteren besonders vorteilhaften Ausgestaltung werden zur Bestimmung der Radabrollumfangsunterschiede der Radabrollumfang ($U_1$) des vorderen rechten Rades mit dem Radabrollumfang ($U_3$) des hinteren rechten Rades gegenüber der Radabrollumfang ($U_2$) des vorderen linken Rades mit dem Radabrollumfänge ($U_4$) des hinteren rechten Rades in Bezug gesetzt werden.

Alternativ können zur Bestimmung der Radabrollumfangsunterschiede der Radabrollumfang ($U_1$) des vorderen rechten Rades mit dem Radabrollumfang ($U_3$) des hinteren linken Rades gegenüber dem Radabrollumfang ($U_2$) des vorderen linken Rades mit dem Radabrollumfänge ($U_4$) des hinteren rechten Rades in Bezug gesetzt werden.

Gemäß einer weiteren besonders vorteilhaften Ausgestaltung werden die absoluten Radabrollumfänge ($U_i$) während ein oder mehrerer spezieller Fahrmanöver bestimmt und/oder eingelernt.

In einer weiteren besonders vorteilhaften Ausgestaltung werden die absoluten Radabrollumfänge ($U_i$) während ein oder mehreren, insbesondere zahlreichen, Einparkvorgängen und/oder Rangiervorgängen des Fahrzeuges bestimmt und/oder eingelernt.

Bei einer weiteren besonders vorteilhaften Ausgestaltung werden die absoluten Radabrollumfang ($U_i$) während einer Geradeausfahrbewegung des Fahrzeuges in Vorwärts- oder Rückwärtsrichtung bestimmt oder eingelernt oder dass bei der Bestimmung der absoluten Radabrollumfang ($U_i$) als Parameter eines Berechnungsmodells Geradeausfahrbewegungen des Fahrzeuges in Vorwärts- oder Rückwärtsrichtung stärker berücksichtigt werden als Fahrbewegungen mit einem Lenkwinkel ungleich etwa Null Grad.

Gemäß einer weiteren vorteilhaften Ausgestaltung der Erfindung werden die absoluten Radabrollumfänge ($U_i$) und/oder die Radabrollumfangsdifferenzen zwischen den Rädern bestimmt oder eingelernt, wenn dies durch den Fahrer initiiert wird, insbesondere durch Betätigung eines Reset-Tasters, oder wenn eine Veränderung an den Reifen oder Rädern festgestellt wird.

Bei einer weiteren besonders vorteilhaften Ausgestaltung werden die Teilungsfehler eines Encoders eines Raddrehzahlsensors bestimmt und zur Korrektur des Raddrehzahlsignals ($\omega_i$) herangezogen.

In einem weiteren Ausführungsform wird das Verfahren auf einem System durchgeführt das aus mindestens einem Fährerassistenzsystem und mindestens einem Fahrzeugsicherheitssystem besteht, wobei das Fahrerassistenzsystem ein ACC-System ist und als Fahrzeugsicherheitssysteme ein Reifendrucküberwachungssystem und ein ABS-System eingesetzt werden, wobei das ACC-System, Reifendrucküberwachungssystem und ABS-System über drahtgebunden oder drahtlose Datenleitungen interagieren und über eine gemeinsame Mensch-Maschine-Schnittstelle Informationen an den Fahrer ausgeben.

Das erfindungsgemäße Verfahren wird gestartet, d. h. der Fahrer muss das System z. B. per Taster zurücksetzen (Reset), wenn die Reifendrücke angepasst wurden bzw. Reifen oder Räder gewechselt worden sind und es erfolgt nach dem Reset eine Lernphase. Zu jedem Zeitpunkt des Verfahrens ist es angedacht, dass das erfindungsgemäße Verfahrens bzw. Reifendrucküberwachungssystems durch eine Reset-Möglichkeit, z.B. in Form eines Tasters oder über einen Menüpunkt im Bordcomputer, um vom Fahrer erkannte Veränderungen an den Reifen den Systemen anzuzeigen. Nach jedem Reset werden die Radabrollumfänge $U_i$ neu bestimmt und neu eingelernt.

Bei dem erfindungsgemäßen Verfahren werden vorzugsweise die Prüfgrößen (DIAG, SIDE, AXLE) gleichzeitig bestimmt/ eingelernt. Diese genannten Größen bilden nur ein mögliches Beispiel von einem Satz von Parametern. Es sind erfindungsgemäß auch weitere Parametersätze angedacht, über die auf die Radabrollumfänge $U_i$ geschlossen werden können. Um Rechenleistung des verwendeten Prozessors/ Mikrocomputers und die Bandbreitenbelegung auf den entsprechenden drahtgebunden und/oder mobilen Bussystemen zwischen den Systemen zu sparen werden in einer weiteren bevorzugten Ausführung die Prüfgrößen (DIAG, SIDE, AXLE) nacheinander bestimmt und eingelernt.

Die Bestimmung der Abrollumfangsdifferenzen ($\Delta$DIAG, $\Delta$SIDE, $\Delta$AXLE) aus den aktuell ermittelten und den gelernten Prüfgrößen (DIAG, SIDE, AXLE) erfolgt vorzugsweise in identischen Geschwindigkeits-, und/oder Radmomenten-, und/oder Querbeschleunigungsintervallen. Es ist weiterhin bevorzugt, dass das Einlernen bei dem vorgeschriebenen Reifensolldruck erfolgt.

In einer ersten bevorzugten Ausführungsform des erfindungsgemäßen Verfahrens werden die Änderungen des Abrollumfangs bestimmt. Hierzu werden drei Prüfgrößen (DIAG, SIDE, AXLE) gleichzeitig oder nacheinander bestimmt, wobei in jede Prüfgröße (DIAG, SIDE, AXLE) Größen eingehen, welche die Raddrehbewegungen der Räder beschreiben, wie beispielsweise die Umdrehungszeiten einer Radumdrehung, der Abrollumfang, etc.. Die Prüfgrößen bestehen im wesentlichen aus einem Quotienten in dessen Zähler und Nenner jeweils die Summe zweier die Raddrehbewegungen beschreibender Größen stehen. In dem Zähler der Prüfgröße DIAG steht beispielsweise die Summe der Größen der Raddrehbewegung der zwei sich diagonal gegenüberliegenden Räder (z. B. Rad vorne links und Rad hinten rechts), wohingegen im Nenner die Summe der übrigen Größen der Raddrehbewegungen steht (z. B. Rad vorne rechts und Rad hinten links). Bei der Prüfgröße SIDE stehen im Zähler beispielsweise die Größen der Raddrehbewegungen einer Fahrzeugseite (z. B. Rad vorne rechts und Rad hinten rechts, sowie Rad vorne links und Rad hinten links), wohingegen bei der Prüfgröße AXLE im Zähler die Größen der Raddrehbewegungen der Räder einer Achse (z. B. Rad vorne rechts und Rad vorne links) stehen. Die Nenner werden jeweils aus den übrigen Größen der Raddrehbewegungen gebildet. Diese Prüfgrößen werden in verschiedenen Geschwindigkeits-, Radmomenten- und Querbeschleunigungs- oder Gierratenintervallen ermittelt. Weiterhin werden Abrollumfangsdifferenzen (ΔDIAG, ΔSIDE, ΔAXLE) zwischen aktuellen und gelernten Werten bestimmt. Diese Abrollumfangsdifferenzen werden folglich auch in den Intervallen aus einem aktueller Wert und dem zum aktuellen Intervall gehörigen Lernwert bestimmt.

Verallgemeinert erfolgt die Bestimmung des Wegdifferenzen an einem oder mehreren Reifen unter Auswertung der Abrollumfangsdifferenzen ΔDIAG, ΔSIDE und ΔAXLE. In einer besonders einfachen Ausgestaltung wird hierbei folgende Bedingung ausgewertet:

$$\text{Max1}\{|\Delta DIAG|, |\Delta SIDE|, |\Delta AXLE|\} +$$

$$\tag{1}$$

$$\text{Max2}\{|\Delta DIAG|, |\Delta SIDE|, |\Delta AXLE|\} > 2*S_{eff}$$

wobei Max1 den größten Wert und Max2 den zweitgrößten Wert aus der Menge der Beträge der Differenzen der drei berücksichtigten Abrollumfangsdifferenzen {|ΔDIAG|, |ΔSIDE|, |ΔAXLE|} darstellt.

Die Abrollumfangsdifferenzen (ΔDIAG, ΔSIDE, ΔAXLE) werden so interpretiert, dass sich für die verschiedenen Reifen des Fahrzeugs die einzelnen Anteile an den Abrollumfangsänderungen $\Delta U_i$ bestimmen lassen. Die Werte ΔUi beschreiben dabei, wie groß die einzelnen Abrollumfangsabweichungen an einem von drei Rädern i bezogen auf das vierte Rad j sind. Für das vierte Rad j gilt folglich $\Delta U_j = 0$. Der Zusammenhang lautet also:

$$\{\Delta U_i, i=1,2,3\} = f(\Delta DIAG, \Delta SIDE, \Delta AXLE)$$

Welches Rad j#i die geringste Veränderung erfahren hat und damit zur Bezugsgröße wird, ist ebenfalls Ergebnis dieser Betrachtung, die unten näher erläutert wird.

Zunächst wird die genaue Vorgehensweise zur Bestimmung der $\Delta U_i$-Werte näher erläutert. Dabei wird zuerst eine Hilfsgröße $U_i$ eingeführt, welche die Abrollumfangsveränderung an einer Position i bezogen auf den gelernten Zustand beschreibt. Die gesuchte Größe $\Delta U_i$ bezeichnet dagegen die Abrollumfangsveränderung $U_i$ an der Position i bezogen auf die Abrollumfangsveränderung $U_j$ an der Position mit der kleinsten Abrollumfangsveränderung j, es gilt also $\Delta U_i = U_i-U_j$. Zur Berechnung der Anteile der Abrollumfangsveränderungen $U_i$, die auf die einzelne Radposition entfallen, wird folgende Linearkombination betrachtet:

$$(\Delta DIAG, \Delta SIDE, \Delta AXLE)^T = \sum (U_i * Ri) \quad \text{mit } i = 0...3$$

$$\tag{2}$$

(wobei i = 0 ...3 Rad vorne links, Rad vorne rechts, Rad hinten rechts, Rad hinten links bedeutet)

In dieser Definition ist durch die gewählten Vorzeichen der Vektoren berücksichtigt, dass nur Abrollumfangsverringerungen im Betrieb zu erwarten sind und diese Abrollumfangsverringerungen als positive $U_i$ definiert sind.

Das Gleichungssystem (2) umfasst drei Gleichungen mit den vier Unbekannten $U_i$ und ist damit ohne zusätzliche Bedingung nicht lösbar. Setzt man zunächst voraus, dass die Radposition j mit dem niedrigsten Druckverlust bekannt ist, kann folgende Substitution erfolgen:

$$\Delta U_i = U_i - U_j \text{ mit } U_j = \text{Min}(\{U_i\})$$

$$(\Delta\text{DIAG}, \ \Delta\text{SIDE}, \ \Delta\text{AXLE})^T = \sum (\Delta U_i * Ri) \text{ mit } i = 0...3, \ i \neq j$$

(3)

Da die Position j unbekannt ist, muss dass Gleichungssystem viermal unter Variation von j mit j = 0...3 gelöst werden. Aus der Menge der vier möglichen Lösungen $L_j$

$$L_j = \{ \Delta U_i, \ i = 0...3, \ i \neq j \}_j \ j = 0...3$$

ist nur die Lösung $L_j$ korrekt, für die alle $\Delta U_i$ positive Werte annehmen (wie per Definition festgelegt), d. h.

$$L_j = L_j\_\text{Lösung}: \ \Delta U_i \geq 0 \ \text{für} \ i = 0...3, \ i \neq j$$

Die korrekte Lösung $L_j$ enthält also die einzelnen Anteile der Abrollumfangsänderungen.

Da ein Fahrzeug zumeist mit einer Vielzahl von unterschiedlichen Reifengrößen und Reifentypen ausgestattet werden kann, ist es sinnvoll, dies bei dem erfindungsgemäßen Verfahren zu berücksichtigen. Diese Berücksichtigung erfolgt in einem ersten Schritt des erfindungsgemäßen Verfahrens durch eine Lernphase, in welcher die Reifeneigenschaften, der verwendeten Reifen eingelernt wird. Das Lernen der individuellen Eigenschaften, wie die Druckempfindlichkeit ($df_p/dp$), eines jeden Reifens am Fahrzeug erfolgt z.B. durch die Ausnutzung der Druckveränderungen während des Aufwärmens oder Abkühlens der Reifen im Betrieb. Die Kriterien (DIAG, SIDE, AXLE, $\Delta f_p$) für die Raddrehbewegungen und die Schwingungseigenschaften werden in Geschwindigkeits- und Radmomentenbereichen eingelernt. Die Auswertung der Kriterien (DIAG, SIDE, AXLE, $\Delta f_p$) erfolgt ebenfalls geschwindigkeits- und radmomentenabhängig.

In einer weiteren vorteilhaften Ausgestaltung erfolgt die achsweise Bestimmung der Abrollumfangsunterschiede zur Berechnung der "Bahnkurve" beim Einparken, auf welchem Kurvenradius sich das Fahrzeug bewegt. Hierbei werden die achsweisen Abrollunterschiede links/rechts als FRONT und REAR Kenngrößen bestimmt. Diese Kenngrößen werden zunächst für die Geradeausfahrt bestimmt und aus dem aktuellen $\Delta$FRONT und $\Delta$REAR kann dann unter Verwendung der Spurweite auf den aktuell gefahrenen Kurvenradius und damit auf die Bahnkurve während des Einparkens geschlossen werden bzw. es kann der aktuelle fahrzeugspezifische Zusammenhang zwischen Lenkwinkel und Kurvenradius ermittelt werden, der dann als Eingangsgröße für das Einparksystem dient.

Dabei werden entweder diese Kenngrößen direkt in dem indirekten Reifendruckkontrollsystem bestimmt oder sie werden aus einem bestehenden indirekten Reifendruckkontrollsystem näherungsweise aus (DIAG, SIDE) ermittelt (z.B. FRONT= (DIAG+SIDE)/2, REAR= (DIAG-SIDE)/2). Diese Bestimmung könnte kontinuierlich während der Fahrt stattfinden, Druckverlusten würden damit automatisch berücksichtigt. Bevorzugt findet das kontinuierliche Lernen bei Geradeausfahrt, bei kleinen Geschwindigkeiten und für die Antriebsachse bei kleinen Antriebsmomenten statt.

Da der Reifentyp in der Regel nicht bekannt ist und für normale Fahrzeuge in der Regel eine Vielzahl von Reifendimensionen und - typen eingesetzt werden dürfen, ist es erforderlich, dass ein System dies verarbeiten kann.

Nach der Ermittlung der Radabrollumfangsunterschiede, wird die Information dem Einparkhilfesystem zugeführt, und eine etwaige bereits berechnet Sollbahn entsprechend um die Radabrollunterschiede korrigiert.

In einer weiteren bevorzugten Ausführungsform ist es vorgesehen, in einer vorgeschalteten Lernphase zuerst die ungefähre Frequenzlage der Torsionseigenfrequenz $f_p$ zu bestimmen. Hierbei wird in einer zeitlich kurzen, ersten Lernphase zunächst die grobe Lage der Torsionseigenfrequenz $f_p$ in einem weiten Frequenzbereich (z. B. 20 bis 60 Hz) mit einer groben Frequenzauflösung, z. B. 1 Hz (entspricht 41 Frequenzschritte) bestimmt. Anschließend wird nun der relevante Frequenzbereich für die eigentliche Lernphase festgelegt, z. B. zu $f_p$ -15 Hz < f < $f_p$ + 5 Hz, wobei hier nun eine Frequenzauflösung von 0,5 Hz möglich ist, um dieselbe Anzahl Frequenzschritte auszunutzen.

Wird z. B. zunächst ein Reifen weitgehend kalt bei einer Fahrzeuggeschwindigkeit von 40 km/h eingelernt und dann im Anschluss an eine längere Autobahnfahrt warm wieder bei 40 km/h betrieben, so ist eine Erhöhung der Torsionseigenfrequenz aufgrund des höheren Luftdrucks zu erkennen. Der oben im Beispiel genannte empfindliche Reifen zeigt dann eine Verschiebung der Torsionseigenfrequenz um etwa 2,4 Hz, der unempfindliche nur um etwa 1,2 Hz. Erfolgt nun z. B. aufgrund einsetzenden Regens eine erneute Abkühlung der Reifen, so wirkt sich dies in genau umgekehrter Weise aus.

Eine entscheidende Voraussetzung für die Ausnutzung dieses Effekts ist somit, genau detektieren zu können, wann aufgewärmte Reifen vorliegen bzw. wann die Reifen kalt sind. In dem erfindungsgemäßen Verfahren wird hierbei der Effekt ausgenutzt, das Aufwärm- und Abkühlvorgänge immer alle vier Reifen am Fahrzeug betreffen, d. h. stellt man eine einheitliche Erhöhung der Torsionseigenfrequenz $f_p$ an allen vier Rädern fest, so ist davon auszugehen, dass die Reifen warm sind. Verringert sich die Torsionseigenfrequenz $f_p$ dagegen an allen vier Rädern gleichzeitig und verharrt dann auf einem Wert, so ist von kalten Reifen z. B. aufgrund von Regen oder allgemeiner Abkühlung auszugehen. Wenn sich demgegenüber die Torsionseigenfrequenz $f_p$ an allen vier Rädern gleichzeitig verringert und nicht auf einem Wert verharrt, so ist von einem gleichzeitigen Druckverlust an allen vier Rädern auszugehen. Veränderungen, die nur einzelne Reifen betreffen werden nicht ausgenutzt. Hierbei wird also nicht nur der Absolutwert der Torsionseigenfrequenzen herangezogen, sondern insbesondere das Verhalten der Torsionseigenfrequenzen über der Zeit bewertet.

In einer weiteren Ausgestaltung der Ausführungsform wird darüber hinaus die Außentemperatur verwendet, um das aktuelle Temperaturniveau gegenüber dem Temperaturniveau zum Zeitpunkt des Resets, sowie das Aufwärmpotential abhängig vom Zustand der Umgebung bewerten zu können. Sofern das erfindungsgemäße Verfahren in einem "Bremsensteuergerät" ausgeführt wird, kann für die Außentemperatur, die mit dem im "Bremsensteuergerät" bereits vorhandenen Sensor gemessene Temperatur verwendet werden. Andernfalls kann auch die Außentemperatur vom Fahrzeugbus, z. B. CAN, benutzt werden. Außerdem wird innerhalb eines jeden Zündungslaufs eine Bewertung der Walkenergie der Reifen vorgenommen, die im wesentlichen vom Geschwindigkeitsprofil abhängt (z. B. aufintegrieren der Rotationsenergien). Hierüber kann die erwartete Druckerhöhung abgeschätzt werden.

In einer weiteren Ausgestaltungsform wird darüber hinaus die Fahrzeugstandzeit vor dem aktuellen Zündungslauf mit herangezogen, um sicherer bewerten zu können, ob mit warmen oder kalten Reifen gestartet wurde. Diese Standzeit kann z. B. durch einen Nachlauf des Rechners über das "Zündung aus" Signal hinaus ermittelt werden. In der Praxis wird aus Gründen der Schonung der Fahrzeugbatterie vermutlich ein Nachlauf von maximal 30 min ausreichen. Oder die Uhrzeit wird direkt vom Fahrzeugbus, z. B. CAN, eingelesen. Zur Stützung der Annahme einer regenbedingten Abkühlung der Reifen können darüber hinaus Signale eines Regensensors vom Fahrzeugbus eingelesen werden.

In einem vorteilhaften Ausführungsbeispiel wird beim geraden Zurücksetzen in einer Parklücke durch einen nach hinten ausgerichteten Abstandssensor der zurückgelegte Weg, z.B. als Änderung des Abstandes $d_j$ zu einem dahinter parkenden Fahrzeug, vermessen. Dieser wird mit den mittels der Raddrehzahlsensoren gemessenen Radumdrehungen in Beziehung gesetzt, und so die absoluten Radabrollumfänge $U_i$ der Reifen bestimmt.

Besonders bevorzugt werden die Raddrehzahlen $\omega_i$ und die Abstände $d_j$ bei Fahrsituationen mit einem Lenkwinkel von etwa Null Grad, d.h. bei annährender Geradeausfahrt, miteinander verknüpft. So wird sichergestellt, dass die durch die Abstandssensoren vermessene "Luftlinie" auch der gefahrenen Wegstrecke entspricht.

Bei einer Bestimmung der Radabrollumfänge $U_i$ anhand eines Parameter-Modells werden Fahrsituationen mit einem Lenkwinkel von etwa Null Grad, d.h. annähernde Geradeausfahrt, besonders berücksichtigt bzw. gewichtet, da hier keine lenkwinkelabhängigen Modellfehler für die prädizierte und somit berechnete Bahnkurve berücksichtigt werden müssen.

Für eine möglichst genaue Bestimmung der Radabrollumfänge $U_i$ ist eine ausreichende Genauigkeit der verwendeten, insbesondere vor- und zurückgewandten, Umfelderfassung notwendig. Ebenso ist es zur Verbesserung der erzielten Genauigkeit von Vorteil, wenn der Teilungsfehler jedes Encoders der Raddrehzahlsensoren während der Fahrt gelernt wird. Die gelernten Teilungsfehler werden dann jeweils zur Korrektur der Raddrehzahlen $\omega_i$ verwendet: Eine Korrektur ist besonders bei der Auswertung von Bruchteilen von Radumdrehungen relevant.

In einem weiteren Ausführungsbeispiel wird beim Rangieren innerhalb der Parklücke sowie in der endgültigen Parkposition durch die nach vorne und nach hinten gerichteten Abstandssensoren die Parklückenlänge gemessen. Die Abweichung zwischen der nach dem Berechnungsmodell mit angenommenen Abrollumfänge $U_i$ vorhergesagten Parklückenlänge und der gemessenen Parklückenlänge kann gespeichert werden. Mit einem Faktor, der die Zuverlässigkeit der gemessenen Abstandswerte angibt, können die Radabrollumfänge $U_i$ angepasst werden, um beim nächsten Einparkvorgang eine präzisere Vorhersage machen zu können und damit präziser einparken zu können.

Es ist vorteilhaft, die Radabrollumfänge $U_i$ durch langfristige Beobachtung, z.B. über zahlreiche Einpark- und/ oder Rangiervorgänge, zu bestimmen, bzw. die voreingestellten Werte für die Rad Radabrollumfänge $U_i$ durch die präzisierten, während der Lernphase neu bestimmten Radabrollumfänge $U_i$ zu ersetzen.

Das erfindungsgemäße Verfahren wird bevorzugt mit den bekannten indirekten Reifendruckkontrollsystemen, welche z.B. relative Abrollumfangsänderungen bewerten. Hierbei sind die wichtigsten Vorteile, die erhöhte Robustheit durch Plausibilisierung der Signale untereinander, und eine erhöhte Gesamtsystemverfügbarkeit. Die ermittelten absoluten Radabrollumfänge $U_i$ können außerdem zur Identifikation des Reifentyps herangezogen werden.

In einem weiteren Ausführungsbeispiel ist es vorgesehen, dass der Fahrer über eine Mensch-Maschine-Schnittstelle, welche bevorzugt als Touchscreen ausgebildet ist, und sowohl für Anzeigezwecke, wie auch für universelle Bedienzwecke - gegebenenfalls auch für andere Geräte wie insbesondere einer Navigationseinheit - zur Dateneingabe und Datenausgabe dient, dem Fahrzeug mitteilt, welcher Reifentyp und damit welcher Reifenabrollumfang montiert ist. Durch diese Eingabe kann der Abrollumfang zur Initialisierung der Modellparameter direkt herangezogen, wobei das "Weiterlernen" während des erfindungsgemäßen Verfahrensablaufs durchgeführt wird, da sich der Abrollumfang während des Fahrbetriebs z.B. aufgrund von Abrieb und Druckverlust ändert.

Bei einem weiteren Ausführungsbeispiel sind drehrichtungserkennender Radsensoren zur Ermittlung der Radabrollumfänge $U_i$ vorgesehen.

Die geschätzten Odometrieabweichungen oder Abweichungen des Gesamtsystems können durch weitere Sensorik, wie z.B. GPS und Drehratensensor verfeinert, abgesichert und/oder plausibilisiert werden.

**Patentansprüche**

1. Verfahren zur Unterstützung eines Fahrers beim Einparken oder Rangieren eines Kraftfahrzeuges, das mindestens ein Fahrerassistenzsystem und ein Fahrzeugsicherheitssystem aufweist, mit folgenden Schritten:

   a) Erkennung des Umfeldes mittels des Fahrerassistenzsystems
   b) Berechnung einer Sollbahn in einem Berechungsmodell

   **dadurch gekennzeichnet,**
   **dass** mittels des Fahrzeugsicherheitssystems eine Überwachung und Ermittlung der Umlauflängenunterschiede zwischen den einzelnen Räder erfolgt, die Sollbahn in einem Berechnungsmodell mittels der Umlauflängenunterschiede vorhergesagt wird.

2. Verfahren nach Anspruch 1
   **dadurch gekennzeichnet**,
   als Umlauflänge eines Rades, ein jeweiliger Radabrollumfang ($U_i$) mindestens eines Rades mittels mindestens eines Fahrzeugsicherheitssystems ermittelt wird und die ermittelten Radabrollumfänge ($U_i$) der einzelnen Räder zur Ermittlung der Radabrollumfangsunterschiede ausgewertet werden.

3. Verfahren nach mindestens einem der vorangegangen Ansprüche,
   **dadurch gekennzeichnet,**
   **dass** mittels eines ABS-System und/oder ESP-Systems und eines indirektes Reifendrucküberwachungssystem als Fahrzeugsicherheitssystems für die Überwachung der Radabrollumfangsunterschiede zwischen den einzelnen Räder erfolgt.

4. Verfahren nach mindestens einem der vorangegangen Ansprüche,
   **dadurch gekennzeichnet,**
   **dass** zur Bestimmung der Radabrollumfangsunterschiede der Radabrollumfang ($U_1$) des vorderen rechten Rades mit dem Radabrollumfang ($U_2$) des vorderen linken Rades in Bezug gesetzt sowie der Radabrollumfang ($U_3$) des hinteren linken Rades mit dem Radabrollumfänge ($U_4$) des hinteren rechten Rades in Bezug gesetzt.

5. Verfahren nach mindestens einem der vorangegangen Ansprüche,
   **dadurch gekennzeichnet,**
   **dass** zur Bestimmung der Radabrollumfangsunterschiede der Radabrollumfang ($U_1$) des vorderen rechten Rades mit dem Radabrollumfang ($U_3$) des hinteren rechten Rades gegenüber der Radabrollumfang ($U_2$) des vorderen linken Rades mit dem Radabrollumfänge ($U_4$) des hinteren rechten Rades in Bezug gesetzt werden.

6. Verfahren nach mindestens einem der Ansprüche 1 bis 4,
   **dadurch gekennzeichnet,**
   **dass** die absoluten Radabrollumfänge ($U_i$) während ein oder mehrerer spezieller Fahrmanöver bestimmt oder eingelernt werden.

7. Verfahren nach mindestens einem der Ansprüche 1 bis 5,
   **dadurch gekennzeichnet,**
   **dass** die absoluten Radabrollumfänge ($U_i$) während ein oder mehreren, insbesondere zahlreichen, Einparkvorgängen und/oder Rangiervorgängen des Fahrzeuges bestimmt oder eingelernt werden.

8. Verfahren nach mindestens einem der Ansprüche 1 bis 6,
   **dadurch gekennzeichnet,**
   **dass** die absoluten Radabrollumfang ($U_i$) während einer Geradeausfahrbewegung des Fahrzeuges in Vorwärts- oder Rückwärtsrichtung bestimmt oder eingelernt werden oder dass bei der Bestimmung der absoluten Radabroll-

umfang (U$_i$) als Parameter eines Berechnungsmodells Geradeausfahrbewegungen des Fahrzeuges in Vorwärts- oder Rückwärtsrichtung stärker berücksichtigt werden als Fahrbewegungen mit einem Lenkwinkel ungleich etwa Null Grad.

9. Verfahren nach mindestens einem der Ansprüche 1 bis 7,
**dadurch gekennzeichnet,**
**dass** die absoluten Radabrollumfänge (U$_i$) und/oder die Radabrollumfangsdifferenzen zwischen den Rädern bestimmt oder eingelernt werden, wenn dies durch den Fahrer initiiert wird, insbesondere durch Betätigung eines Reset-Tasters, oder wenn eine Veränderung an den Reifen oder Rädern festgestellt wird.

10. Verfahren nach mindestens einem der Ansprüche 1 bis 9,
**dadurch gekennzeichnet, dass** der Teilungsfehler eines Encoders eines Raddrehzahlsensors bestimmt wird und zur Korrektur des Raddrehzahlsignals (ω$_i$) herangezogen wird.

11. System zum Durchführen des Verfahrens nach Anspruch 1, bestehend aus mindestens einem Fahrerassistenzsystem und mindestens einem Fahrzeugsicherheitssystem,
**dadurch gekennzeichnet, dass**
das Fahrerassistenzsystem ein ACC-System ist und als Fahrzeugsicherheitssysteme ein Reifendrucküberwachungssystem und ein ABS-System eingesetzt werden, wobei das ACC-System, Reifendrucküberwachungssystem und ABS-System über drahtgebunden oder drahtlose Datenleitungen interagieren und über eine Mensch-Maschine-Schnittstelle Statusinformationen an den Fahrer ausgeben.

## Claims

1. A method for supporting a driver in parking or manoeuvring a motor vehicle, including at least one driver assistance system and one vehicle safety system, comprising the steps of:

   a) detecting the environment by means of the driver assistance system,
   b) calculating a required path in a calculation model,

   **characterized in that**
   a monitoring and determination of the circumferential length differences between the individual wheels is performed by means of the vehicle safety system, the required path is predicted in a calculation model by means of the circumferential length differences.

2. A method according to claim 1,
**characterized in that**
a respective wheel rolling circumference (U$_1$) of at least one wheel is determined as circumferential length of a wheel by means of at least one vehicle safety system and the determined wheel rolling circumferences (U$_1$) of the individual wheels are evaluated for determining the wheel rolling circumference differences.

3. A method according to at least one of the preceding claims,
**characterized in that**
the monitoring of the wheel rolling circumference differences between the individual wheels is performed by means of an ABS and/or ESP system and an indirect tyre pressure monitoring system as a vehicle safety system.

4. A method according to at least one of the preceding claims,
**characterized in that**
for determining the wheel rolling circumference differences , the wheel rolling circumference (U$_1$) of the front right wheel is correlated with the wheel rolling circumference (U$_2$) of the front left wheel, and the wheel rolling circumference (U$_3$) of the rear left wheel is correlated with the wheel rolling circumference (U$_4$) of the rear right wheel.

5. A method according to at least one of the preceding claims,
**characterized in that**
for determining the wheel rolling circumference differences, the wheel rolling circumference (U$_1$) of the front right wheel is correlated with the wheel rolling circumference (U$_3$) of the rear right wheel as against the wheel rolling circumference (U$_2$) of the front left wheel correlated with the wheel rolling circumference (U$_4$) of the rear right wheel.

**6.** A method according to at least one of claims 1 to 4,
**characterized in that**
the absolute wheel rolling circumferences ($U_i$) are determined or taught in during one or several special driving manoeuvres.

**7.** A method according to at least one of claims 1 to 5,
**characterized in that**
the absolute wheel rolling circumferences ($U_i$) are determined or taught in during one or several, in particular numerous, parking processes and/or manoeuvring processes of the vehicle.

**8.** A method according to at least one of claims 1 to 6,
**characterized in that**
the absolute wheel rolling circumferences ($U_i$) are determined or taught in during a straight-on travel movement of the vehicle in a forward or backward direction or that in determining the absolute wheel rolling circumferences ($U_i$) as parameters of a calculation model, straight-on travel movements of the vehicle in a forward or backward direction are taken more into account than travel movements with a steer angle not equal to about zero degrees.

**9.** A method according to at least one of claims 1 to 7,
**characterized in that**
the absolute wheel rolling circumferences ($U_i$) and/or the wheel rolling circumference differences between the wheels are determined or taught in when this is initiated by the driver, in particular by actuating a reset push button or when a change is detected on the tyres or wheels.

**10.** A method according to at least one of claims 1 to 9,
**characterized in that** the dividing error of an encoder of a wheel speed sensor is determined and is used for correcting the wheel speed signal ($\omega_i$).

**11.** A system for carrying out the method according to claim 1, consisting of at least one driver assistance system and at least one vehicle safety system,
**characterized in that**
the driver assistance system is a ACC system and a tyre pressure monitoring system and an ABS are employed as vehicle safety systems, wherein the ACC system, tyre pressure monitoring system and ABS interact by way of wired or wireless data lines and provide status information to the driver by way of a man-machine interface.

**Revendications**

**1.** Procédé pour assister un conducteur lors du stationnement ou de la manoeuvre d'un véhicule automobile, présentant au moins un système d'assistance du conducteur et un système de sécurité de véhicule, comprenant les étapes consistant:

a) à reconnaître l'environnement au moyen du système d'assistance du conducteur,
b) à calculer une voie de consigne dans un modèle de calcul,

**caractérisé en ce que**
une surveillance et détermination des différences de longueur circonférentielle entre les différentes roues sont effectuées au moyen du système de sécurité de véhicule, la voie de consigne est prédite dans un modèle de calcul au moyen des différences de longueur circonférentielle.

**2.** Procédé selon la revendication 1,
**caractérisé en ce que**
une circonférence de roulement respective ($U_1$) d'au moins une roue est déterminée en tant que longueur circonférentielle d'une roue au moyen d'au moins un système de sécurité de véhicule et les circonférences de roulement déterminées ($U_1$) des différentes roues sont dépouillées pour déterminer les différences de circonférence de roulement des roues.

**3.** Procédé selon au moins une des revendication précédentes,
**caractérisé en ce que**

la surveillance des différences de circonférence de roulement entre les différentes roues est effectuée au moyen d'un système ABS et/ou d'un système ESP et d'un système indirecte de surveillance de la pression des pneus en tant que système de sécurité de véhicule.

**4.** Procédé selon au moins une des revendication précédentes,
**caractérisé en ce que**
pour déterminer les différences de circonférence de roulement des roues, la circonférence de roulement ($U_1$) de la roue droite avant est mise en relation avec la circonférence de roulement ($U_2$) de la roue gauche avant et la circonférence de roulement ($U_3$) de la roue gauche arrière es mise en relation avec la circonférence de roulement ($U_4$) de la roue droite arrière.

**5.** Procédé selon au moins une des revendication précédentes,
**caractérisé en ce que**
pour déterminer les différences de circonférence de roulement des roues, la circonférence de roulement ($U_1$) de la roue droite avant est mise en relation avec la circonférence de roulement ($U_3$) de la roue droite arrière par rapport à la circonférence de roulement ($U_2$) de la roue gauche avant mise en relation avec la circonférence de roulement ($U_4$) de la roue droite arrière.

**6.** Procédé selon au moins une des revendications 1 à 4,
**caractérisé en ce que**
les circonférences de roulement des roues absolues ($U_i$) sont déterminées ou apprises durant une ou plusieurs manoeuvres de conduite spéciales.

**7.** Procédé selon au moins une des revendications 1 à 5,
**caractérisé en ce que**
les circonférences de roulement des roues absolues ($U_i$) sont déterminées ou apprises durant une ou plusieurs, en particulier des nombreuses, opérations de stationnement et/ou de manoeuvre du véhicule.

**8.** Procédé selon au moins une des revendications 1 à 6,
**caractérisé en ce que**
les circonférences de roulement des roues absolues ($U_i$) sont déterminées ou apprises durant un mouvement de conduite tout droit du véhicule dans une direction avant ou arrière, ou **en ce que**, lors de la détermination des circonférences de roulement des roues absolues ($U_i$) en tant que paramètre d'un modèle de calcul, les mouvements de conduite tout droit du véhicule sont pris en compte plus fortement que les mouvements à un angle de direction inégal à environ zéro degré.

**9.** Procédé selon au moins une des revendications 1 à 7,
**caractérisé en ce que**
les circonférences de roulement des roues absolues ($U_i$) et /ou les différences des circonférences de roulement entre les roues sont déterminées ou apprises lorsque ceci est initié par le conducteur, en particulier en actionnant un bouton-poussoir reset, ou lorsque un changement est constaté sur les pneus ou roues.

**10.** Procédé selon au moins une des revendications 1 à 9,
**caractérisé en ce que**
l'erreur de division d'un encodeur d'un détecteur de vitesse des roues est déterminée est utilisée pour corriger le signal de vitesse des roues ($\omega_i$).

**11.** Système pour réaliser le procédé selon la revendication 1, composé d'au moins un système d'assistance du conducteur et au moins un système de sécurité de véhicule,
**caractérisé en ce que**
le système d'assistance du conducteur est un système ACC et un système de surveillance de la pression des pneus et un système ABS sont employés en tant que systèmes de sécurité de véhicule, dans lequel le système ACC, le système de surveillance de la pression des pneus et le système ABS interagissent par l'intermédiaire des lignes de données avec fil ou sans fil et fournissent des informations d'état au conducteur par l'intermédiaire d'une interface homme-machine.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005042061 A
- DE 19721480 A
- DE 1194304 A
- EP 1206359 A
- US 6826462 A
- DE 10032605 A
- EP 0869875 A
- EP 0675812 A
- DE 3813083 A1
- DE 19809416 A1
- DE 102005006966 A1
- DE 19940007 A1
- DE 10338255 A1